Europäisches Patentamt

European Patent Office

Office européen des brevets

(11) Veröffentlichungsnummer: **0 044 876**
**A1**

## EUROPÄISCHE PATENTANMELDUNG

(21) Anmeldenummer: **80104383.7**

(51) Int. Cl.³: **A 01 B 3/42**

(22) Anmeldetag: **25.07.80**

(43) Veröffentlichungstag der Anmeldung: **03.02.82**
**Patentblatt 82/5**

(71) Anmelder: **Rabewerk Heinrich Clausing, D-4515 Bad Essen 8 - Linne (DE)**

(72) Erfinder: **Schroer, Friedrich, Im Weidengrund 5, D-4515 Bad Essen 1 (DE)**
Erfinder: **Holsing, Dieter, Schröttinghauser Strasse 23, D-4515 Bad Essen 2 (DE)**

(74) Vertreter: **Patentanwälte Dipl.-Ing. R. Schlee Dipl.-Ing. A. Missling, Bismarckstrasse 43, D-6300 Giessen (DE)**

(84) Benannte Vertragsstaaten: **DE FR GB IT NL**

(54) **Drehvorrichtung für Drehpflüge.**

(57) Bei einer Vorrichtung für das Drehen des Pflugrahmens mit zwei doppelt wirkenden Hydraulikzylindern, die keine Kulissenführungen, Zahnstangen usw. aufweist, sind die Befestigungspunkte (3, 11; 4, 10) der Hydraulikzylinder (5, 6) zumindest am drehbaren oder am feststehenden Pflugteil zueinander versetzt angeordnet, so daß in der ersten Drehhälfte beide Hydraulikzylinder (5, 6) gleichsinnig mit Drucköl beaufschlagt sind und in der zweiten Drehhälfte zumindest für einen Zeitraum, bis zu dem der zweite Hydraulikzylinder seinen Totpunkt überschritten hat, die Druckölzufuhr nur zu dem Hydraulikzylinder erfolgt, der die Totpunktlage zuerst überschritten hat.

Patentanwälte

Dipl.-Ing. Richard Schlee
Dipl.-Ing. Arne Missling

6300 Lahn-Giessen 1 , 22. 7.1980
Bismarckstrasse 43
Telefon: (0641) 71019

Mi/V 14.136

0044876

Rabewerk Heinrich Clausing,
4515 Bad Essen 8 - Linne

Drehvorrichtung für Drehpflüge

Die Erfindung betrifft eine Drehvorrichtung für das Drehen des Pflugrahmens von Drehpflügen um eine Achse bzw. eine Wendewelle mit zwei je am feststehenden und am drehbaren Pflugteil angreifenden doppelt wirkenden Hydraulikzylindern, bei der zur Einleitung der zweiten Drehhälfte ein Steuerventil umgeschaltet wird, das die beiden Kolbenseiten der Hydraulikzylinder wechselseitig mit der Pumpe bzw. dem Tank der Schlepperhydraulik verbindet.

Das Drehen des Pflugrahmens kann entweder mit einem Hub des Hydraulikzylinders erreicht werden, allerdings sind dann mechanische Einrichtungen erforderlich, wie ein Gelenkviereck oder Zahnstangen, die den Hub des Hydraulikzylinders in einen ausreichenden Drehwinkel umsetzen. Diese Dreheinrichtungen zeigen den Nachteil, daß ein Hydraulikzylinder benötigt wird, dessen Moment nicht dem jeweiligen Arbeitsbedarf angepaßt ist. Nach Einleitung der Drehbewegung hat der Schwerpunkt seinen größten Abstand von der Wendewelle, d.h. hier ist das größte Moment erforderlich. Mit weitergehender Drehung wird das erforderliche Moment kleiner, da der Schwerpunkt sich mit seinem wirksamen Hebelarm immer mehr der Wendewelle bzw. der ideellen Drehachse nähert. In der zweiten Drehhälfte wird der Schwerpunkt dann wieder abgesenkt. Dies bedeutet, daß beim Drehen des

- 2 -

Drehpfluges in einem Hub aus diesem Grunde und der Ausnutzung nur des halben Zylindervolumens für eine Drehhälfte ein mehr als doppelt so großes Zylindervolumen erforderlich ist, als bei Drehvorrichtungen, bei denen der Hydraulikzylinder den Drehvorgang in zwei Hüben bewerkstelligt. Beim Drehen des Pflugrahmens in zwei Hüben tritt jedoch das Problem auf, daß vor Beginn der zweiten Drehhälfte der Pflugrahmen oder der Hydraulikzylinder in eine solche Stellung gebracht sein muß, daß nach Umschalten des Hydraulikzylinders dieser relativ zur Wendewelle einen Dreharm vorfindet, der die Fortführung der Drehbewegung in der richtigen Richtung gestattet.

Für das Drehen des Pfluges mit einem Hydraulikzylinder mit zwei Hüben sind Einrichtungen bekannt, bei denen in der Totpunktlage des Hydraulikzylinders ein automatisches Umsteuern erfolgt, so daß sofort unter Ausnutzung des Schwunges der Drehbewegung die Drehung der zweiten Drehhälfte bewirkt wird (DE-OS 20 58 049). Diese Drehvorrichtungen haben jedoch den Nachteil, daß nicht mit halbgedrehtem Pflug gefahren werden kann, was nicht nur für den Transport auf der Straße, sondern auch im Vorgewende Nachteile mit sich bringt. So ist es im Vorgewende, insbesondere bei feuchtem Wetter und am Hang besonders schwierig, den Pflug zurückzustoßen, zumal, wenn ein Hinterrad vorhanden ist, das asymmetrisch hinter dem Schlepper läuft, so daß das Fahrverhalten für die Links- und Rechtskurve unterschiedlich ist. Bei halbgedrehtem Pflug kann, infolge der besseren Manövrierfähigkeit, das Vorgewende schmaler gehalten werden, des weiteren sind für das Umsetzen des Pfluges nicht soviele Manöver erforderlich, was durch die zusätzlichen Fahrspuren immer eine Verfestigung des Bodens bedeutet.

Es sind des weiteren Drehvorrichtungen bekannt, bei denen der Pflugrahmen mit zwei Hüben des Hydraulikzylinders gedreht wird und bei denen eine Arretierung des Pflugrahmens in der halbgedrehten Stellung möglich ist. Eine derartige Vorrichtung ist z.B. aus der DE-OS 22 60 791 bekannt. Diese Drehvorrichtung ist jedoch relativ kompliziert im Aufbau und damit teuer in der Herstellung, da der Anlenkpunkt des Drehzylinders am feststehenden Pflugrahmenteil vor dem Drehen der zweiten Drehhälfte in eine andere Stellung verschwenkt werden muß. Um das Verschwenken des Anlenkpunktes des Hydraulikzylinders zu vermeiden ist es aus DE-AS 27 56 548 bekannt, zwei Hydraulikzylinder vorzusehen, wobei der eine in der ersten und der zweite in der zweiten Drehhälfte aktiv ist. Da jeder Hydraulikzylinder das gesamte Drehmoment aufbringen muß, müssen beide Hydraulikzylinder entsprechend groß dimensioniert werden. Desweiteren greifen die Enden der Hydraulikzylinder am drehbaren Pflugteil in Kulissen an, was zu einer aufwendigen und vor allem störanfälligen Konstruktion führt.

Schließlich ist aus der DE-OS 28 31 381 eine Drehvorrichtung bekannt, die zwei Hydraulikzylinder aufweist, die synchron arbeiten. Die eigentliche Drehbewegung wird hier von einem Haupthydraulikzylinder geleistet, der zwischen dem drehbaren und dem feststehenden Pflugteil angelenkt ist. Diesem Haupthydraulikzylinder ist ein Hilfshydraulikzylinder parallel geschaltet, der am feststehenden Pflugrahmenteil angelenkt ist und am drehbaren Pflugteil über eine Kulissenführung angreift. Dieser Hilfszylinder bewirkt eine Verdrehung des Pflugrahmens in dem Bereich, in dem der Schwerpunkt in etwa über der reellen oder ideellen Drehachse liegt. Diese Drehbewegung erfolgt im Sinne der Drehrichtung, so daß nach dem Umschalten der Haupthydraulikzylinder wieder einen wirksamen Hebelarm bezüglich der Wendewelle vorfindet, wodurch die Drehung in der zweiten Drehhälfte in der richtigen Richtung erfolgt. Der Haupt- und der Hilfszylinder sind gegenläufig geschaltet, so daß der Hilfszylinder in der zweiten Drehhälfte wieder in seine Ausgangsstellung zurückgezogen wird. Auch für diese bekannte Drehvorrichtung gilt, daß der Haupthydraulikzylinder so dimensioniert werden muß, daß sie das gesamte
Anfangsdrehmoment aufnehmen kann, da der Hilfszylinder gerade in der Anfangsphase nur einen sehr kleinen Hebelarm zur
Wendewelle besitzt. Darüber hinaus erfordert auch diese bekannte Vorrichtung eine aufwendige mechanische Konstruktion
mit Kulissenführung, die bei dem bekanntermaßen rauhen Betrieb
störanfällig ist.

Der Erfindung liegt die Aufgabe zugrunde, eine Drehvorrichtung der eingangs genannten Art mit zwei doppelt wirkenden
Hydraulikzylindern, die den Drehvorgang in zwei Hüben bewirken,
vorzuschlagen, die ohne komplizierte Mechanik wie Kulissenführung oder Zahnstangen auskommt, jeder der beiden Drehzylinder für sich gesehen kleiner gehalten werden kann, als es
für die Bewältigung des maximalen Drehmomentes erforderlich
ist, eine sichere Drehung über die Totpunktlage hinaus und
ein Arretieren in der halbgedrehten Stellung gewährleistet ist.

Diese Aufgabe wird erfindungsgemäß dadurch gelöst, daß die Befestigungspunkte der Hydraulikzylinder zumindest am drehbaren
oder am feststehenden Pflugteil zueinander versetzt angeordnet
sind, daß in der ersten Drehhälfte beide Hydraulikzylinder
gleichsinnig mit Drucköl beaufschlagt sind und daß in der
zweiten Drehhälfte zumindest für einen Zeitraum, bis zu dem
der zweite Hydraulikzylinder seinen Totpunkt überschritten
hat, die Druckölzufuhr nur zu dem Hydraulikzylinder erfolgt,
der die Totpunktlage zuerst überschritten hat.

Die beiden Hydraulikzylinder werden also am feststehenden
und am drehbaren Pflugteil lediglich gelenkig angeschlossen.
Kulissenführungen, Lenker, Zahnstangen etc. entfallen. Beide
Hydraulikzylinder arbeiten in der ersten Drehhälfte gleichsinnig, so daß,da beide mit einem großen wirksamen Hebelarm zur Achse bzw. Wendewelle angreifen, diese im günstigsten Fall jeweils nur halb so groß wie ein einzelner in zwei Hüben wirkender Hydraulikzylinder dimensioniert werden müssen. Bei Abschluß der ersten Drehhälfte liegen diese beiden Hydraulikzylinder nicht nur zu beiden Seiten des Schwerpunktes, sondern auch zu beiden Seiten der Wendewelle, so daß die zweite Drehhälfte durch den jeweils seinen Totpunkt bereits überschrittenen und somit in Drehrichtung vorn liegenden Hydraulikzylinder beendet wird. Wird die Drehvorrichtung horizontal statt vertikal angeordnet, ergeben sich für die Anlenkpunkte der Hydraulikzylinder relativ zum Schwerpunkt sinngemäß andere Lagen.

Der in Drehrichtung hinten liegende Hydraulikzylinder braucht während der gesamten zweiten Hälfte des Drehvorganges nicht mit Drucköl beaufschlagt zu werden, denn der Schwerpunkt des drehbaren Pflugteiles wird in dieser Drehhälfte ohnehin abgesenkt. Es ist jedoch auch zulässig, diesen Hydraulikzylinder dann mit Drucköl zu beaufschlagen, wenn dieser seinen Totpunkt überschritten hat.

Gemäß einer vorteilhaften Ausführungsform der Erfindung liegen die beiden Hydraulikzylinder in halbgedrehter Stellung des Pfluges spiegelbildlich zu einer durch die Achse bzw. die Wendewelle gelegten Ebene. Vorteilhaft werden zwei gleiche Hydraulikzylinder verwandt, die im gleichen Abstand vom Schwerpunkt und von der Wendewelle am drehbaren Pflugteil angreifen.

Das Schaltventil, das in der zweiten Drehhälfte den in Drehrichtung hinten liegenden Hydraulikzylinder zumindest eine Zeit lang von der Drucklölzufuhr abschaltet, wird vorteilhaft von der Relativbewegung zwischen den drehbaren und feststehenden Pflugrahmenteilen umgeschaltet. Der Umschaltvorgang kann in irgendeinem Zeitpunkt während der ersten Drehhälfte erfolgen, ohne daß eine Beeinträchtigung der Drehbewegung erfolgt, da

- 6 -

hierdurch das Ausdrücken des Hydrauliköles aus den Hydraulikzylindern nicht beeinträchtigt wird.

Weitere vorteilhafte Ausgestaltungen der Erfindung gehen aus den Unteransprüchen und der Beschreibung in Verbindung mit der Zeichnung hervor.

Ein Ausführungsbeispiel der Erfindung ist im folgenden anhand der Zeichnung näher beschrieben, in dieser zeigen:

Fig. 1 eine schematische Darstellung einer Drehvorrichtung gemäß der Erfindung in einer Arbeitsstellung,

Fig. 2 die gleiche Ausführungsform wie Fig. 1 jedoch in halbgedrehter Stellung,

Fig. 3 die gleiche Vorrichtung in der anderen Arbeitsstellung und

Fig. 4 eine Ansicht einer erfindungsgemäßen Drehvorrichtung, teilweise im Schnitt.

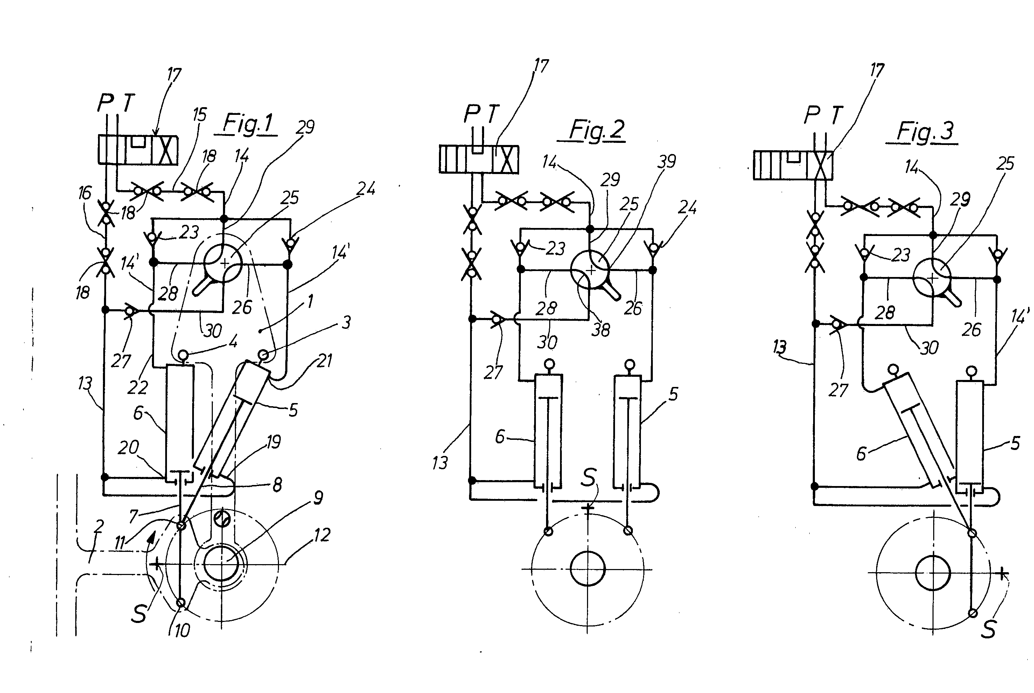

In Fig. 1 ist strichpunktiert das feststehende Pflugteil (Pflugvordergestellt) und der drehbare Pflugteil 2 (Pflugrahmen) dargestellt. Am feststehenden Pflugteil 1 sind in den Anschlußpunkten 3, 4 zwei Hydraulikzylinder 5,6 angeschlossen, deren Kolbenstangen 7, 8 am um eine Achse 9 drehbaren Pflugteil 2 in den Anschlußpunkten 10, 11 angeschlossen sind. Es ist selbstverständlich auch möglich, die Anschlußpunkte von Hydraulikzylinder und Kolbenstangen miteinander zu vertauschen.

Der Schwerpunkt des drehbaren Pflugteils ist mit S bezeichnet. Die Anschlußpunkte 10,11 der Hydraulikzylinder 5,6 am drehbaren Pflugteil 2 liegen zu beiden Seiten einer durch den Schwerpunkt S und die Achse 9 gehenden Ebene 12. Im Ausführungsbeispiel ist der Abstand der Anschlußpunkte 10 und 11 von der Ebene 12 gleich groß.

Bei den Hydraulikzylindern 5 und 6 handelt es sich um doppelt wirkende Hydraulikzylinder, die parallel geschaltet und über Druckölleitungen 13 und 14 an Schlauchverbindungen 15, 16 angeschlossen sind, die ihrerseits mit einem Steuerventil 17 verbunden sind. Das Steuerventil 17 ist normalerweise am Schlepper angeordnet, die Schlauchleitungen 15, 16, die die Verbindung zwischen Schlepper und Pflug herstellen, sind bekannterweise über Kupplungen 18 angeschlossen.

Die Druckölleitung 13, die zu der Unterseite der beiden Hydraulikzylinder führt und bei Druckbeaufschlagung ein Anheben des drehbaren Pflugteiles 2 bewirkt, ist unmittelbar an die Anschlüsse 19, 20 der Hydraulikzylinder 5, 6 angeschlossen. In die zu den Anschlüssen 21, 22 der Hydraulikzylinder 5, 6 führende Druckölleitung 14 bzw. 14' sind zwei Rückschlagventile 23, 24 eingeschaltet, die die Zufuhr von Drucköl zu den Hydraulikzylindern 5, 6 verhindern.

In Strömungsrichtung gesehen vor dem Rückschlagventil 23 ist eine Leitung 28 und vor dem Rückschlagventil 24 eine Leitung 26 angeschlossen, deren andere Enden mit einem Schaltventil 25 verbunden sind. An diesem Schaltventil sind zwei weitere Leitungen 29 und 30 angeschlossen, von der die Leitung 29 an die Leitung 14 und die Leitung 30 unter Einschaltung eines Rückschlagventiles 27 an die Leitung 13 angeschlossen sind. Das Rückschlagventil 27 ist so geschaltet, daß Drucköl nicht von der Leitung 13 in die Leitung 14' gelangen kann.

In Fig. 2 ist das Schaltventil 25 in seine zweite mögliche Stellung umgeschaltet. Durch das Schaltventil 25 kann entweder die Leitung 30 mit der Leitung 26 oder der Leitung 28 verbunden werden und die Leitung 29 entweder mit der Leitung 28 oder mit der Leitung 26. Die Bedeutung des Schaltventiles wird später erläutert werden.

Die von der Pumpe der Schlepperhydraulik kommende Leitung ist mit P und die zum Tank der Schlepperhydraulik führende Leitung ist mit T bezeichnet. Das Steuerventil 17 kann drei mögliche Stellungen einnehmen. In der ersten Stellung, die in Fig. 1 dargestellt ist, ist die Pumpenleitung mit der Leitung 13 und die Tankleitung mit der Leitung 14 verbunden. In der in Fig. 2 gezeigten neutralen Stellung findet eine automatische Verriegelung statt, demhier bildet das Rückschlagventil 23 eine Rückdrehsperre. In Fig. 3 ist im Gegensatz zur Fig. 1 die Pumpenleitung an die Leitung 14 und die Tankleitung an die Leitung 13 angeschlossen.

Die Funktionsweise der Vorrichtung ist folgende.

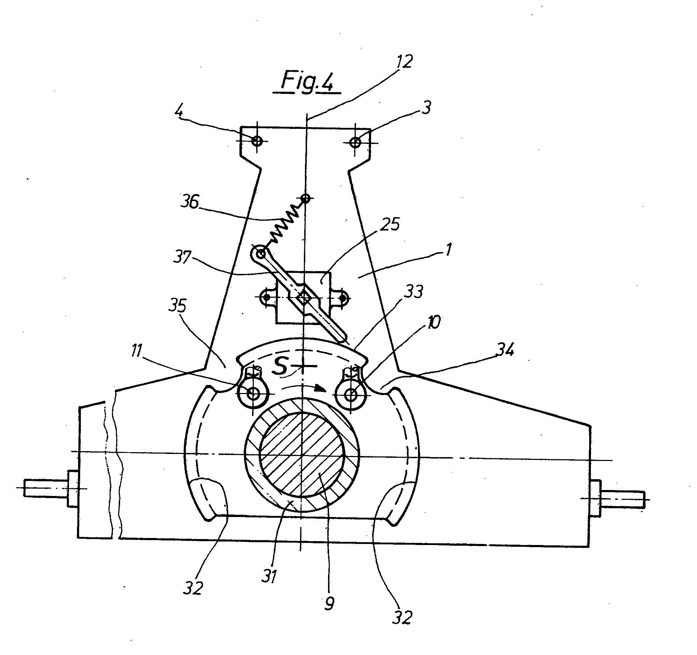

In der in Fig. 1 dargestellten Arbeitsstellung wird zur Einleitung der Drehung Drucköl über die Leitung 13 und die Anschlüsse 19, 20 in die Hydraulikzylinder 5, 6 eingeleitet. Im ersten Augenblick der Drehung, d.h. dann, wenn das größte Drehmoment aufzubringen ist, ziehen beide Hydraulikzylinder gleichzeitig mit dem größt möglichen Hebelarm. Der Hydraulikzylinder 5 überschreitet zuerst seine Totpunktlage. Vor Erreichen der halbgedrehten Stellung, wie sie in Fig. 2 dargestellt ist, wird das Schaltventil 25 durch die Relativbewegung zwischen dem drehbaren Pflugteil 2 und dem feststehenden Pflugteil 1 umgeschaltet, wie dies anhand der Fig. 4 beispielhaft erläutert werden wird. Die Entleerung der Hydraulikzylinder 5, 6 über die Leitung 14 wird hierdurch nicht behindert. Wird das Steuerventil 17 nicht aus der in Fig. 1 dargestellten Stellung umgeschaltet, so nimmt der Pflug von selber die in Fig. 2 gezeigte Stellung ein. Anschließend wird das Steuerventil 17 umgeschaltet, so daß die Pumpenleitung mit der Leitung 14 und die Tankleitung mit der Leitung 13 verbunden ist. In dieser Stellung wird dem Hydraulikzylinder 5, d.h. dem Hydraulikzylinder, der zuerst die Totpunktlage überschritten hat, Drucköl über die Leitung 14' zugeführt, während der zweite Hydraulikzylinder 6 wegen des Rückschlagventiles 23 nicht mit Drucköl beaufschlagt wird. Die Drehung kann nunmehr alleine durch den Hydraulikzylinder 5 vollendet werden, während der Hydraulikzylinder 6 während der zweiten Hälfte der Drehbewegung nicht mit Drucköl beaufschlagt zu werden braucht. Der sich im Hydraulikzylinder oberhalb des Kolbens einstellende Unterdruck ist vernachlässigbar zu dem im Hydraulikzylinder 5 herrschenden Pumpendruck, der zu dem durch das Absenken des Schwerpunktes S unterstützt wird. In der Endstellung hat der Pflug dann die in Fig. 3 gezeigte gegenüberliegende Arbeitsstellung eingenommen. Das Zurückdrehen des Pfluges erfolgt entsprechendermaßen, wobei die Druckölleitung 13 durch Umschalten des Steuerventiles 17 in die in Fig. 1 gezeigte Stellung mit Drucköl beaufschlagt wird. Vor Erreichen der oberen Totpunktstellung des Pfluges wird das Schaltventil 25 wieder in die in Fig. 1 gezeigte Stellung umgeschaltet, wobei nach Umsteuerung des Steuerventiles 17 in die in Fig. 3 gezeigte Stellung nunmehr der Hydraulikzylinder 6 entsprechend Fig. 1 über die Leitungen 28 und 29 unter Umgehung des Rückschlagventiles 23 mit Drucköl beaufschlagt wird, während der Hydraulikzylinder 5 drucklos bleibt. Die Rückdrehsperre in der Mittelstellung, d.h. in der halbgedrehten Stellung wird dann durch das Rückschlagventil 24 bzw. durch die neutrale Stellung des Steuerventiles erreicht.

In Fig. 4 ist eine Vorrichtung für das Drehen von Drehpflügen, teilweise im Schnitt, dargestellt, in der gleiche Teile mit gleichen Bezugszeichen versehen sind. Der Einfachheit und der Übersichtlichkeit halber sind die Hydraulikzylinder 5, 6 weggelassen, nur deren Anschlußpunkte 3, 4 und 10, 11 sind dargestellt. Auf der Achse 9 ist die Lagerung 31 des drehbaren Pflugteiles 2 drehbar, die zwei Gleitbahnen 32, 33 trägt. Zwischen den Gleitbahnen 32, 33 sind Vertiefungen 34, 35 angeordnet. Auf den Gleitbahnen 32, 33 gleitet ein durch eine Feder 36 belasteter Schaltfinger 37 der die Umschaltung des Schaltventiles 25 bewirkt, wie sie in den Fig. 1 bis 3 beschrieben ist. Die Vorrichtung ist in Fig. 4 in ihrer oberen Totpunktlage dargestellt, d.h. die Hydraulikzylinder und das Schaltventil 25 haben die in Fig. 2 dargestellte Lage. Bei der Drehung des drehbaren Pflugteiles 2 aus der in Fig. 1 gezeigten in die Stellung nach Fig. 2 hat der Schaltfinger 37 bereits die Vertiefung 34 passiert und wurde hierdurch in die andere Stellung umgeschaltet. Die Vertiefung 35 passiert der Schaltfinger, ohne daß eine Umschaltung des Schaltventiles 25 erfolgt. Bei Passierung der Vertiefung 35 macht zwar der Schaltfinger 37 eine kleine Bewegung, diese ist jedoch so klein, daß eine Umschaltung des Ventiles hierdurch nicht erfolgt. Bei Beginn einer Drehung zeigt somit der Schaltfinger 37 entgegengesetzt zur Drehrichtung, so daß dann beim Passieren der entsprechenden Vertiefung 34, 35 eine Umschaltung des Schaltventiles 25 erfolgt.

Wie aus den Schaltungen ersichtlich, kann die Umschaltung des Schaltventiles 25 an irgendeinem Punkt in der ersten Drehhälfte erfolgen, wobei vorteilhaft diese Umschaltung vor der Überschreitung der Totpunktlage des in Drehrichtung vorne liegenden Hydraulikzylinders erfolgt. Im gezeigten Ausführungsbeispiel wird der in Drehrichtung hinten liegende Hydraulikzylinder während der gesamten zweiten Drehhälfte nicht mit Drucköl beaufschlagt. Es ist jedoch ohne weiteres möglich, ohne daß der Rahmen der Erfindung verlassen wird, diesen dann mit Drucköl zu beaufschlagen, wenn dieser seine Totpunktlage überschritten hat. Desweiteren ist es möglich, unterschiedlich große Hydraulikzylinder zu verwenden, die in unterschiedlichen Abständen zum Schwerpunkt an-

0044876

geordnet sind. Desweiteren kann auch die Umschaltung des Schaltventiles 25 entweder getrennt von Hand oder aber auch zusammen mit dem Steuerventil 17 erfolgen. Desweiteren ist auch eine automatische hydraulische Umschaltung des Schaltventiles 25 möglich.

- 1 -

Ansprüche:

1. Drehvorrichtung für das Drehen des Pflugrahmens von Drehpflügen um eine Achse bzw. eine Wendewelle mit zwei je am feststehenden und am drehbaren Pflugteil angreifenden doppelt wirkenden Hydraulikzylindern, bei der zur Einleitung der zweiten Drehhälfte ein Steuerventil umgeschaltet wird, das die beiden Kolbenseiten der Hydraulikzylinder wechselseitig mit der Pumpe bzw. dem Tank der Schlepperhydraulik verbindet, dadurch gekennzeichnet, daß die Befestigungspunkte (3, 7; 4, 10) der Hydraulikzylinder (5, 6) zumindest am drehbaren oder am feststehenden Pflugteil zueinander versetzt angeordnet sind, daß in der ersten Drehhälfte beide Hydraulikzylinder (5, 6) gleichsinnig mit Drucköl beaufschlagt sind und daß in der zweiten Drehhälfte zumindest für einen Zeitraum, bis zu dem der zweite Hydraulikzylinder seinen Totpunkt überschritten hat, die Druckölzufuhr nur zu dem Hydraulikzylinder erfolgt, der die Totpunktlage zuerst überschritten hat.

2. Drehvorrichtung nach Anspruch 1, dadurch gekennzeichnet, daß die Hydraulikzylinder (5, 6) sowohl am feststehenden (1) und am drehbaren Pflugteil (2) an Zapfen oder Wellen schwenkbar angelenkt sind, daß die Anlenkpunkte (10, 11) der Hydraulikzylinder (5, 6) am drehbaren Pflugteil (2) je auf einer Seite einer durch die Achse bzw. Welle (9) und dem Schwerpunkt S des drehbaren Pflugteils (2) gelegten Ebene (12) liegen, daß die zu den Hydraulikzylindern (5, 6) führenden Druckölleitungen (13, 14) so geschaltet sind, daß mindestens zu Beginn der ersten Drehhälfte beide Hydraulikzylinder (5, 6) einander parallel geschaltet sind und

- 2 -

gleichsinnig arbeiten, daß bei Erreichen oder zumindest bei Beginn der zweiten Drehhälfte die zu den Anschlüssen (21, 22) der anderen Kolbenseite der Hydraulikzylinder (5, 6) führende Drucköllleitung (14) durch Betätigung eines Schaltventils (25) die Drucköllzufuhr nur zu dem Hydraulikzylinder erfolgt, der die Totpunktlage zuerst überschritten hat.

3. Drehvorrichtung nach Anspruch 1 oder 2, dadurch gekennzeichnet, daß zur Dämpfung der Drehung des Pflugrahmens in der zweiten Drehhälfte in die Hydrauliklkleitungen (13) ein Rückschlagventil eingeschaltet ist, dem eine Drossel parallel geschaltet ist.

4. Drehvorrichtung nach einem der Ansprüche 1 bis 3, dadurch gekennzeichnet, daß das Schaltventil (25) von der Relativbewegung zwischen dem drehbaren (2) und dem feststehenden Pflugteil (1) geschaltet wird.

5. Drehvorrichtung nach Anspruch 4, dadurch gekennzeichnet, daß am drehbaren Pflugteil eine Kurvenscheibe (32, 33) angebracht ist, mit der eine Schaltklinke (37) des Schaltventiles (25) zusammenwirkt.

6. Drehvorrichtung nach einem der Ansprüche 1 bis 5, dadurch gekennzeichnet, daß das Schaltventil (25) ein Drehschieberventil ist, das zwei Kanäle (38, 39) aufweist, die wahlweise in zu gleichen Enden der Hydraulikzylinder (5, 6) führenden Leitungen (28, 29 bzw. 26, 30) einschaltbar sind.

7. Drehvorrichtung nach einem der Ansprüche 1 bis 6, dadurch gekennzeichnet, daß die eine Kolbenseite der Hydraulikzylinder (5, 6) unmittelbar an eine zum Steuerventil führende Druckölleitung (13) angeschlossen ist, daß in die zu den beiden anderen Kolbenseiten führenden Druckölleitungen (14') je ein Rückschlagventil (23, 24) eingesetzt ist, die die Zufuhr von Drucköl zu den Hydraulikzylindern (5, 6) verhindern und daß die Rückschlagventile (23, 24) über durch das Schaltventil (25) geführte Leitungen (29, 28 bzw. 29, 26) kurzschließbar sind.

8. Drehvorrichtung nach Anspruch 7, dadurch gekennzeichnet, daß von der Leitung (13) zum Schaltventil (25) eine Leitung (30) führt, in die ein Rückschlagventil (27) derart eingeschaltet ist, daß Drucköl nicht von der Leitung (13) zum Schaltventil (25) gelangen kann.

Fig. 1    Fig. 2    Fig. 3

0044876

Fig.4

0044876

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 4 067 396 (G.A. WATTS) <br> * Spalte 2, Zeile 24 bis Spalte 3, Zeile 55; Fig. 3, 5 bis 8 * <br> --- | 1,2 | A 01 B 3/42 |
| D | DE - B1 - 2 756 548 (K. UND J. BRENIG KG) <br> * Anspruch 1; Fig. 13 bis 16 * <br> -- | 1 | |
| D | DE - A1 - 2 831 381 (PFLUGFABRIK LEM- KEN) <br> * Seiten 3 bis 5; Fig. 1 bis 6 * <br> -- | | RECHERCHIERTE SACHGEBIETE (Int. Cl.³) |
| D,A | DE - A - 2 058 049 (HUARD-U.C.F. et al.) <br> -- | | A 01 B 3/42 <br> A 01 B 3/46 |
| D,A | DE - A - 2 260 791 (C.V.R. DOWDESWELL) <br> ----- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 03-03-1981 | SCHOFER |

EPA form 1503.1 06.78